# EUROPÄISCHE PATENTSCHRIFT

(11) **EP 2 938 987 B1**
(45) Veröffentlichungstag und Bekanntmachung des Hinweises auf die Patenterteilung: **17.02.2021**
(21) Anmeldenummer: 13814945.5
(22) Anmeldetag: 20.12.2013
(51) Int. Cl.: G01L 19/06, G01L 19/14, G01L 19/00, G01D 11/24

(54) **DRUCKSENSORANORDNUNG SOWIE VERFAHREN ZUM MONTIEREN EINER DRUCKSENSORANORDNUNG**
PRESSURE SENSOR ARRANGEMENT AND METHOD FOR MOUNTING A PRESSURE SENSOR ARRANGEMENT
ENSEMBLE CAPTEUR DE PRESSION AINSI QUE PROCÉDÉ POUR MONTER UN ENSEMBLE CAPTEUR DE PRESSION

(30) Priorität: 27.12.2012 DE 102012224383; 27.12.2012 DE 102012224380; 17.01.2013 DE 102013200668; 08.05.2013 DE 102013208537
(43) Veröffentlichungstag der Anmeldung: 04.11.2015
(73) Patentinhaber: Robert Bosch GmbH, 70442 Stuttgart (DE)
(72) Erfinder: SEITZ, Roland, 72147 Nehren (DE); WOERNLE, Wolfgang, 72149 Neustetten (DE)
(86) Internationale Anmeldenummer: PCT/EP2013/077719
(87) Internationale Veröffentlichungsnummer: WO 2014/102194

(56) Entgegenhaltungen:
- EP-A1- 0 045 011
- WO-A1-01/57488
- WO-A1-01/57488
- DE-A1- 3 635 165
- DE-A1- 3 635 165
- DE-A1-102008 001 393
- DE-A1-102008 001 393
- GB-A- 1 470 440
- JP-A- H11 241 970

## Beschreibung

Die Erfindung betrifft eine Drucksensoranordnung, mit einem Sensorgehäuse, das einen Druckanschluss aufweist und in einer Sensorkammer einen Drucksensor aufnimmt, und mit einem Druckausgleichselement zum Druckausgleich zu einer Außenumgebung der Drucksensoranordnung.

### Stand der Technik

Die Drucksensoranordnung dient dem Messen eines Drucks, welcher an dem Druckanschluss bereitgestellt wird. Der Druck wird mithilfe des in der Sensorkammer angeordneten Drucksensors gemessen. Zu diesem Zweck ist die Sensorkammer mit dem Druckanschluss, über welchen der Druck an der Drucksensoranordnung anliegt, strömungsverbunden. Die Drucksensoranordnung ist beispielsweise Bestandteil einer Druckschlauchsensoreinrichtung. Bei einer solchen Druckschlauchsensoreinrichtung ist ein als Druckschlauch ausgebildetes Messelement strömungstechnisch mit wenigstens einer Drucksensoranordnung beziehungsweise dem in dieser angeordneten Drucksensor strömungsverbunden. Die dabei vorliegende Strömungsverbindung ist über den Druckanschluss hergestellt. Zu diesem Zweck ist der Druckanschluss beispielsweise als Druckanschlussstutzen ausgeführt.

Auf diesen Anschlussstutzen kann nun beispielsweise ein Ende des Druckschlauchs aufgeschoben werden beziehungsweise aufgeschoben und dort befestigt sein. Besonders bevorzugt ist an jedem Ende des Druckschlauchs eine Drucksensoranordnung vorgesehen. Der Druckschlauch selbst ist elastisch deformierbar, sodass mithilfe der wenigstens einen Drucksensoranordnung eine auf den Druckschlauch wirkende Kraft, welche eine mittels der Drucksensoranordnung feststellbare Druckveränderung in dem Druckschlauch bewirkt, festgestellt werden kann.

Eine derartige Druckschlauchsensoreinrichtung wird beispielsweise in einem Kraftfahrzeug zum Fußgängerschutz eingesetzt. Dazu ist der Druckschlauch in einem Frontbereich des Kraftfahrzeugs, insbesondere an beziehungsweise in einem Frontstoßfänger des Kraftfahrzeugs angeordnet. Auf diese Art und Weise kann mithilfe der Druckschlauchsensoreinrichtung ein Aufprall des Kraftfahrzeugs auf ein Hindernis, beispielsweise einem Fußgänger oder dergleichen, äußerst zuverlässig festgestellt und entsprechend darauf reagiert werden. Die Druckschlauchsensoreinrichtung ist also ihrerseits beispielsweise Bestandteil einer Fahrerassistenzeinrichtung, welche dazu ausgebildet ist, bei dem Feststellen eines Aufpralls mithilfe der Druckschlauchsensoreinrichtung eine Fahrerassistenzmaßnahme, insbesondere eine Bremsung oder dergleichen, vorzunehmen.

Insbesondere im Rahmen der vorstehend beschriebenen Druckschlauchsensoreinrichtung stellt die Drucksensoranordnung, insbesondere zusammen mit dem Druckschlauch, ein im Wesentlichen geschlossenes System dar. Aus diesem Grund ist es notwendig, einen Druckausgleich zu einer Außenumgebung der Drucksensoranordnung zu ermöglichen, wobei dieser Druckausgleich insbesondere zwischen dem Druckanschluss und der Außenumgebung vorgesehen ist. Bei bekannten Drucksensoranordnungen ist nun ein Druckausgleichselement, welches diesen Druckausgleich ermöglicht, in der Sensorkammer angeordnet. So wird das Druckausgleichselement vor unerwünschten Einflüssen aus der Außenumgebung geschützt, welche sich beispielsweise durch Druckwasser, einen Dampfstrahl oder dergleichen ergeben können. Bei einer derartigen Ausführungsform geht von der Sensorkammer eine Druckausgleichsöffnung aus, welche in die Außenumgebung einmündet. Vor einem Verschließen der Sensorkammer nach dem Anordnen des Drucksensors in dieser, muss nun das Druckausgleichselement zum Verschließen der Druckausgleichsöffnung in der Sensorkammer angeordnet werden. Nachfolgend kann die Sensorkammer verschlossen werden.

Ein Druckausgleich kann also ausgehend von dem Druckanschluss nur über die Sensorkammer erfolgen. Dies hat jedoch den Nachteil, dass in der Sensorkammer angeordnete Elemente, beispielsweise der Drucksensor selbst, durch Feuchtigkeit beschädigt werden können, welche aus Richtung des Druckanschlusses eindringt. Die Feuchtigkeit gelangt beispielsweise durch Diffusion in den vorstehend beschriebenen Druckschlauch und kondensiert anschließend bei tiefen Temperaturen, insbesondere in der Sensorkammer. Zudem kann der mittels des Drucksensors gemessene Druck durch die Anordnung des Druckausgleichselements unmittelbar in der Sensorkammer beeinflusst werden.

Aus der DE 36 35 165 A1 ist ein Drucksensor mit einem Druckausgleichselement ausgehend von einer Gehäuseeinrichtung des Drucksensors bekannt. Die Gehäuseeinrichtung setzt sich aus einem wenigstens ein elektrisch leitendes Kontaktelement aufweisenden ersten Gehäuse und einem wenigstens ein elektrisch leitendes Gegenkontaktelement aufweisenden zweiten Gehäuse zusammen. Das erste Gehäuse dient zur Aufnahme eines mit dem Kontaktelement verbundenen elektrischen Bauteiles und das zweite Gehäuse ist zur Aufnahme wenigstens eines mit dem Gegenkontaktelement verbundenen Teiles eines elektrisch leitenden Verbindungselementes vorgesehen. Das Kontaktelement und das Gegenkontaktelement sind nach Art einer Steckverbindung miteinander verbindbar. Das Kontaktelement und das Gegenkontaktelement sind nach dem Herstellen der Steckverbindung innerhalb eines von den beiden Gehäusen gebildeten und von einem Dichtelement abgedichteten Raumes gelegen.

Aus der DE 10 2008 001393 A1 ist ein Luftdrucksensor zur Aufprallerkennung mit einem Raum bekannt, wobei sich in dem Raum ein Sensorelement zur Erzeugung eines Signals in Abhängigkeit von dem Luftdruck befindet. Der Raum wird durch ein Druckausgleichelement abgedichtet, wobei eine Druckübertragung von außen in den Raum ermöglicht wird

Aus der JP H11 241970 A ist ein Drucksensor gemäß dem Oberbegriff der vorliegenden Erfindung bekannt, der dazu ausgestaltet ist, Druckspitzen zu absorbieren.

Weiterer Stand der Technik ist aus den WO 01/57488 A1, DE 10 2008 001393 A1, GB 1 470 440 A sowie der EP 0 045 011 A1 bekannt.

### Offenbarung der Erfindung

Die Drucksensoranordnung mit den Merkmalen des Anspruchs 1 weist dagegen den Vorteil auf, dass die Genauigkeit des Drucksensors erhöht werden kann. Zudem wird das Eindringen von Feuchtigkeit in die Sensorkammer zumindest teilweise verhindert. Dies wird erfindungsgemäß erreicht, indem das Druckausgleichselement strömungstechnisch parallel zu der Sensorkammer mit dem Druckanschluss verbunden ist. Es ist also nicht, wie bisher, vorgesehen, dass das Druckausgleichselement in der Sensorkammer angeordnet ist beziehungsweise eine von der Sensorkammer ausgehende Druckausgleichsöffnung verschließt. Entsprechend ist das Druckausgleichselement erfindungsgemäß strömungstechnisch gesehen weiter von dem Drucksensor entfernt angeordnet als aus dem Stand der Technik bekannt. Das bedeutet, dass sein Einfluss auf die Messgenauigkeit geringer ist, sodass der an dem Druckanschluss beziehungsweise in der Sensorkammer vorliegende Druck mittels des Drucksensors mit höherer Genauigkeit gemessen werden kann.

Durch die Anordnung des Druckausgleichselements außerhalb der Sensorkammer werden zudem Fluidbewegungen in der Sensorkammer, welche nicht durch eine erzwungene Druckveränderung, beispielsweise durch eine Kraftbeaufschlagung des Druckschlauchs, hervorgerufen sind, vermieden. Insbesondere werden diejenigen Fluidbewegungen in der Sensorkammer vermieden, welche allein durch den Druckausgleich mittels des Druckausgleichselements verursacht sind. Bedingt durch die Verringerung der Fluidbewegungen in der Sensorkammer wird jedoch auch der Eintrag von feuchtem Fluid und mithin von Feuchtigkeit in die Sensorkammer vermieden. Entsprechend ist deren Inhalt, insbesondere der Drucksensor, äußerst effizient gegen die Beaufschlagung mit Feuchtigkeit geschützt.

Gemäß einer Ausführungsform ist das Druckausgleichselement als Membran, insbesondere als fluiddichte Membran, ausgebildet. Der Druckausgleich mittels des Druckausgleichselements wird folglich durch dessen Elastizität erzielt. Bevorzugt ist die Membran fluiddicht, verhindert also ein Austreten des in der Sensorkammer beziehungsweise in dem Druckschlauch vorliegenden Fluids. Selbstverständlich kann jedoch die Membran auch gegenüber anderen Medien dicht ausgeführt sein.

Erfindungsgemäß ist vorgesehen, dass der Druckanschluss mit einer Druckanschlussleitung strömungsverbunden ist, von der eine in die Sensorkammer einmündende Sensorleitung abzweigt, und das Druckausgleichselement eine in einer Wandung der Druckanschlussleitung vorgesehene Druckausgleichsöffnung verschließt. Von dem Druckanschluss geht also beispielsweise unmittelbar die Druckanschlussleitung aus. Dabei wird der Druckanschluss wenigstens bereichsweise von der Druckanschlussleitung gebildet. Der Druckausgleich über die Druckausgleichsöffnung beziehungsweise mittels des Druckausgleichselements erfolgt mithin zwischen der Druckanschlussleitung und der Außenumgebung der Drucksensoranordnung.

Die Sensorleitung, welche in die Sensorleitung einmündet, zweigt von dieser Druckanschlussleitung ab. Bevorzugt ist es vorgesehen, dass dieser Abzweig der Sensorleitung von der Druckanschlussleitung strömungstechnisch näher an dem Druckanschluss liegt als die Mündungsstelle der Druckausgleichsöffnung in die Druckanschlussleitung. Es kann jedoch auch vorgesehen sein, dass die Abstände zwischen dem Druckanschluss und dem Abzweig der Sensorleitung sowie dem Druckanschluss und der Druckausgleichsöffnung strömungstechnisch gleich sind, oder dass letzterer kleiner ist, die Druckausgleichsöffnung also strömungstechnisch näher an dem Druckanschluss liegt als die Druckanschlussleitung.

Erfindungsgemäß ist vorgesehen, dass das Druckausgleichselement auf einer Außenseite des Sensorgehäuses angebracht ist und von einer Abdeckung des Sensorgehäuses wenigstens bereichsweise übergriffen ist. Die Druckausgleichsöffnung durchgreift also das Sensorgehäuse ausgehend von der Druckanschlussleitung bis zu der Außenumgebung der Drucksensoranordnung. Sie stellt mithin zunächst eine Strömungsverbindung zwischen der Druckanschlussleitung und der Außenumgebung her, welche jedoch nachfolgend durch das Druckausgleichselement wenigstens teilweise wieder unterbrochen wird. Das Druckausgleichselement ist auf der Außenseite des Sensorgehäuses angeordnet, also auf der der Druckanschlussleitung abgewandten Seite der Druckausgleichsöffnung. Das Druckausgleichselement verschließt diese Seite der Druckausgleichsöffnung vollständig.

Liegt das Druckausgleichselement als Membran vor, ist es empfindlich gegenüber mechanischen Belastungen. Um dennoch Beschädigungen des an der Außenseite des Sensorgehäuses vorliegenden Druckausgleichselements zu vermeiden, soll es von der Abdeckung des Sensorgehäuses wenigstens bereichsweise übergriffen sein. Die Abdeckung liegt dabei jedoch derart von dem Druckausgleichselement beabstandet, dass eine Bewegung, insbesondere ein elastisches Verformen des Druckausgleichselements, zum Zwecke des Druckausgleichs weiterhin problemlos möglich ist. Unter dem Übergreifen des Druckausgleichselements durch die Abdeckung ist zu verstehen, dass die Abdeckung in radialer Richtung bezüglich der Längsmittelachse der Druckausgleichsöffnung zumindest dieselben, bevorzugt jedoch größere, Abmessungen aufweist als das Druckausgleichselement.

Erfindungsgemäß besteht das Sensorgehäuse aus einem ersten Gehäuseteil und einem zweiten Gehäuseteil besteht, wobei der Sensor von den beiden Gehäuseteilen gemeinsam ausgebildet ist. Beide Gehäuseteile weisen dabei jeweils eine Ausnehmung auf, welche nach der Montage der Gehäuseteile aneinander gemeinsam die Sensorkammer darstellen.
Erfindungsgemäß ist der Druckanschluss an dem ersten Gehäuseteil und der Drucksensor an dem zweiten Gehäuseteil vorgesehen. Das Druckausgleichselement ist dabei an einer Außenseite des ersten Gehäuseteils und die das Druckausgleichselement wenigstens bereichsweise übergreifende Abdeckung an dem zweiten Gehäuseteil angeordnet ist.

Diese mehrteilige Ausführung des Sensorgehäuses erlaubt eine besonders einfache Montage der Drucksensoranordnung, weil während der Montage lediglich der Drucksensor an einem der beiden Gehäuseteile angeordnet und nachfolgend die Gehäuseteile miteinander verbunden werden können. Die mehrteilige Ausführung erlaubt zudem ein einfaches Anbringen des Druckausgleichselements. Dabei ist die Druckausgleichsöffnung in dem ersten Gehäuseteil vorgesehen, sodass das Druckausgleichselement an dessen Außenseite angeordnet wird. Während der Montage wird nun zunächst das Druckausgleichselement derart an der Außenseite des ersten Gehäuseteils befestigt, dass die Druckausgleichsöffnung verschlossen ist. Anschließend wird das zweite Gehäuseteil an dem ersten Gehäuseteil angeordnet, insbesondere an diesem befestigt, sodass nachfolgend die Abdeckung das Druckausgleichselement vor äußeren Einflüssen aus der Außenumgebung der Drucksensoranordnung schützt.

Die Druckanschlussleitung weist vorzugsweise einen geraden Verlauf auf, ist also beispielsweise als Bohrung ausgeführt. Insbesondere kann es vorgesehen sein, dass die Druckanschlussleitung auf ihrer dem Druckanschluss abgewandten Seite verschlossen ist, insbesondere durch eine Ausführung der Druckanschlussleitung als Sackbohrung. Die Druckausgleichsöffnung liegt in einer Wandung der Druckanschlussleitung vor. Dabei kann die Wandung in einem Mantel der zylindrisch ausgeführten Druckanschlussleitung vorliegen oder - insbesondere im Falle der Sackbohrung - in ihren Boden beziehungsweise ihren Grund eingebracht sein. Die Druckausgleichsöffnung weist in letzterem Fall beispielsweise einen kleineren Durchmesser auf als die Druckanschlussleitung, sodass diese insgesamt als Stufenbohrung vorliegt.

Eine Weiterbildung der Erfindung sieht vor, dass die Druckausgleichsöffnung sich in Richtung einer Längsmittelachse der Druckanschlussleitung erstreckt oder senkrecht auf dieser steht. Der erstere Fall liegt beispielsweise vor, wenn die Druckanschlussleitung auf der dem Druckanschluss abgewandten Seite verschlossen ist und die Druckausgleichsöffnung in ihren Boden eingebracht ist. In letzterem Fall liegt die Druckausgleichsöffnung in dem Mantel der Druckanschlussleitung vor. Selbstverständlich muss hierbei jedoch keine senkrechte Anordnung vorliegen, also ein 90°-Winkel zwischen den Längsmittelachsen der Druckanschlussleitung und der Druckausgleichsöffnung. Vielmehr kann zwischen den Längsmittelachsen beispielsweise ein spitzer Winkel vorliegen, also ein Winkel von größer als 0° und kleiner als 90°. In beiden Fällen ist die Druckausgleichsöffnung bevorzugt zylindrisch ausgebildet, liegt also beispielsweise als Bohrung in dem Sensorgehäuse vor.

Eine Weiterbildung der Erfindung sieht vor, dass der erste Gehäuseteil und der zweite Gehäuseteil formschlüssig, insbesondere mittels einer Hintergriffsverbindung, miteinander verbunden sind. Prinzipiell kann selbstverständlich eine beliebige Verbindung zwischen den beiden Gehäuseteilen vorliegen. Besonders vorteilhaft ist jedoch eine formschlüssige Verbindung, welche zudem lösbar ausgebildet sein kann. Dies ist beispielsweise mithilfe der Hintergriffsverbindung realisierbar. Zu diesem Zweck weist der erste Gehäuseteil wenigstens ein Rastelement, beispielsweise eine Rastzunge auf, während das zweite Gehäuseteil wenigstens ein mit dem Rastelement zusammenwirkendes Rastgegenelement aufweist, beispielsweise eine Rastausnehmung, in welche der Rastvorsprung rastend eingreift, wenn die beiden Gehäuseteile aneinander montiert werden.

Die erfindungsgemäße Drucksensoranordnung kann für eine Druckschlauchsensoreinrichtung, insbesondere für ein Kraftfahrzeug, verwendet werden. Die Druckschlauchsensoreinrichtung verfügt über einen Druckschlauch sowie wenigstens eine Drucksensoranordnung gemäß den vorstehenden Ausführungen. Der Druckschlauch ist an den Druckanschluss der Drucksensoranordnung angeschlossen. Bevorzugt sind mehrere Drucksensoranordnungen vorgesehen, wobei der Druckschlauch an alle Drucksensoranordnungen angeschlossen ist.

Die Erfindung betrifft weiterhin ein Verfahren zum Montieren einer Drucksensoranordnung gemäß Anspruch 4, wobei die Drucksensoranordnung über ein Sensorgehäuse, das einen Druckanschluss aufweist und in einer Sensorkammer einen Drucksensor aufnimmt, und über ein Druckausgleichselement zum Druckausgleich zu einer Außenumgebung der Drucksensoranordnung verfügt. Dabei ist vorgesehen, dass das Druckausgleichselement strömungstechnisch parallel zu der Sensorkammer mit dem Druckanschluss verbunden wird. Auf die Vorteile einer derartigen Ausgestaltung der Drucksensoranordnung beziehungsweise einer derartigen Vorgehensweise wurde bereits eingegangen. Sowohl das Verfahren als auch die Drucksensoranordnung können gemäß den vorstehenden Ausführungen weitergebildet sein, sodass insoweit auf diese verwiesen wird.

Ferner ist vorgesehen, dass das Sensorgehäuse aus einem ersten Gehäuseteil sowie einem zweiten Gehäuseteil besteht und die Sensorkammer von den beiden Gehäuseteilen gemeinsam ausgebildet wird, wobei der Druckanschluss an dem ersten Gehäuseteil, das Druckausgleichselement an einer Außenseite des ersten Gehäuseteils und der Drucksensor an dem zweiten Gehäuseteil vorgesehen ist, und dass bei einem Befestigen des ersten Gehäuseteils an dem zweiten Gehäuseteil eine an dem zweiten Gehäuseteil angeordnete Abdeckung des Druckausgleichselements wenigstens bereichsweise überdeckend angeordnet wird. Hierauf wurde bereits vorstehend hingewiesen.

Vor dem Befestigen des ersten Gehäuseteils an dem zweiten Gehäuseteil liegt also das Druckausgleichselement derart an der Außenseite des ersten Gehäuseteils vor, dass es aus der Außenumgebung frei zugänglich ist. Dies dient einer guten Montierbarkeit der Drucksensoranordnung, weil das Druckausgleichselement auf einfache Art und Weise zum Verschließen der Druckausgleichsöffnung an der Außenseite des ersten Gehäuseteils angeordnet und befestigt werden kann. Nachfolgend wird das zweite Gehäuseteil bezüglich des ersten Gehäuseteils derart angeordnet, dass das Druckausgleichselement vor den Umgebungseinflüssen aus der Außenumgebung weitestgehend geschützt ist. Zu diesem Zweck ist die wenigstens bereichsweise Überdeckung vorgesehen, auf welche bereits eingegangen wurde.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Drucksensoranordnung mit einem Sensorgehäuse, welches aus einem ersten Gehäuseteil und einem zweiten Gehäuseteil besteht,
- Figur 2: eine Ansicht des zweiten Gehäuseteils,
- Figur 3: eine Ansicht des ersten Gehäuseteils,
- Figur 4: eine weitere Ansicht des ersten Gehäuseteils, und
- Figur 5: das erste Gehäuseteil in einer alternativen Ausgestaltung.

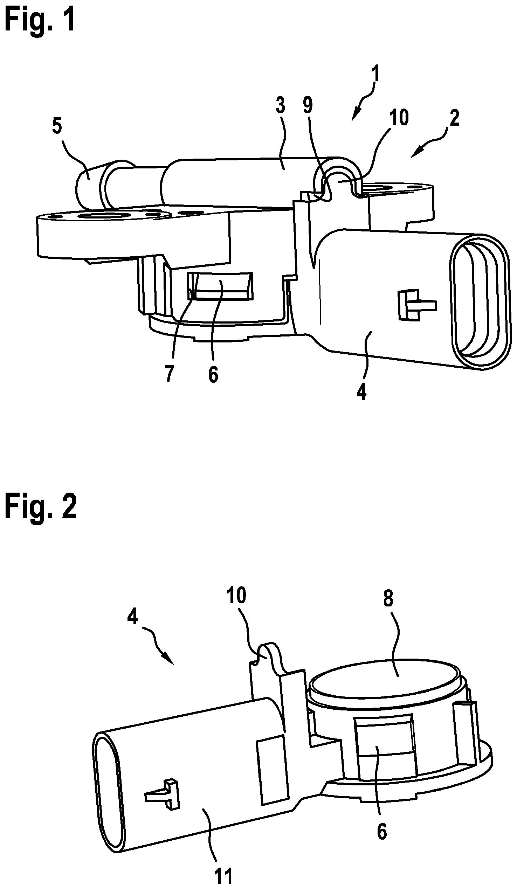

Die Figur 1 zeigt eine Drucksensoranordnung 1, welche ein Sensorgehäuse 2 aufweist. Das Sensorgehäuse 2 ist mehrteilig ausgeführt und weist dabei zumindest ein erstes Gehäuseteil 3 und ein zweites Gehäuseteil 4 auf. Die Drucksensoranordnung 1 verfügt über einen Druckanschluss 5, der beispielsweise als Anschlussflansch für einen Schlauch ausgebildet ist. Der Schlauch ist dabei beispielsweise Bestandteil einer
Druckschlauchsensoreinrichtung. Die Druckschlauchsensoreinrichtung weist dabei auf die wenigstens eine Drucksensoranordnung 1 auf. Vorzugsweise sind jedoch mehrere Drucksensoranordnungen 1 vorgesehen, welche an verschiedene Enden des Druckschlauchs angeschlossen sind. Die beiden Gehäuseteile 3 und 4 sind formschlüssig miteinander verbunden, wozu an dem Gehäuseteil 4 wenigstens ein Rastelement 6 und an dem Gehäuseteil 3 wenigstens ein Rastgegenelement 7 vorgesehen ist. Das Rastelement 6 ist beispielsweise als Rastnase und das Rastgegenelement 7 als Rastausnehmung zur Aufnahme der Rastnase ausgeführt.

In dem Sensorgehäuse 2 ist eine hier nicht erkennbare Sensorkammer 8 zur Aufnahme eines Drucksensors ausgebildet. Diese Sensorkammer 8 ist mit dem Druckanschluss 5 strömungsverbunden. Weiterhin weist die Drucksensoranordnung 1 ein Druckausgleichselement 9 auf, welches hier lediglich bereichsweise erkennbar ist. Das Druckausgleichselement 9 ist auf einer Außenseite des ersten Gehäuseteils 3 angeordnet und wird wenigstens bereichsweise von einer an dem zweiten Gehäuseteil 4 angeordneten Abdeckung 10 übergriffen.

Die Figur 2 zeigt eine Ansicht des zweiten Gehäuseteils 4. Hier ist nun die Sensorkammer 8 erkennbar, welche bei der Montage der beiden Gehäuseteile 3 und 4 aneinander von dem ersten Gehäuseteil 3 verschlossen wird. Es wird deutlich, dass an dem zweiten Gehäuseteil 4 zudem eine Kontakteinrichtung 11 vorliegt, welche der elektrischen Kontaktierung des Drucksensors dient. Die Kontakteinrichtung 11 ist in der hier dargestellten Ausführungsform als Steckaufnahme für einen Stecker ausgeführt.

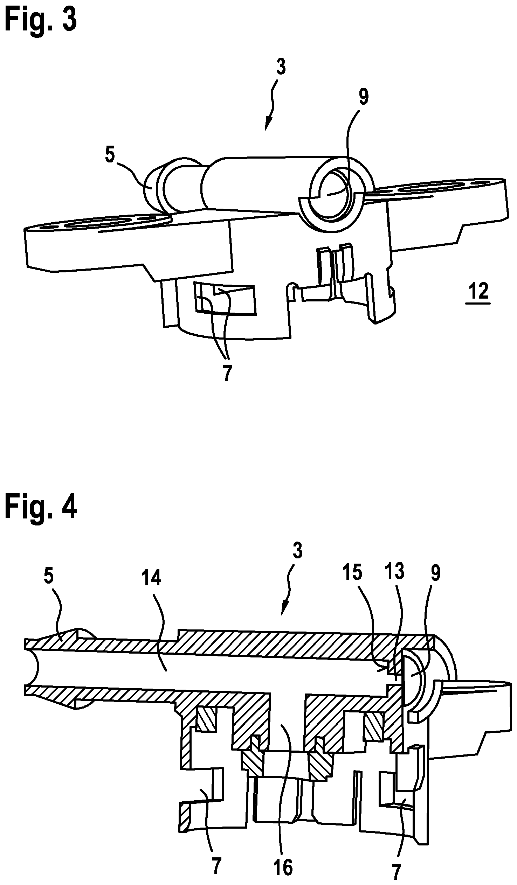

Die Figur 3 zeigt eine Ansicht des ersten Gehäuseteils 3. Hier ist nun wiederum deutlich erkennbar, dass das Druckausgleichselement 9 aus einer Außenumgebung 12 der Drucksensoranordnung 1 ohne Weiteres zugänglich ist, wenn das zweite Gehäuseteil 4 nicht an dem ersten Gehäuseteil 3 befestigt ist und mithin die Abdeckung 10 das Druckausgleichselement 9 wenigstens bereichsweise übergreift. Das Druckausgleichselement 9 verschließt eine hier nicht erkennbare Druckausgleichsöffnung 13, welche in dem ersten Gehäuseteil 3 ausgebildet ist. Es ist zu erkennen, dass das Druckausgleichselement 9 in Umfangsrichtung wenigstens bereichsweise von in axialer Richtung vorspringenden Stegen eingefasst ist, sodass es zusätzlich vor Umgebungseinflüssen geschützt ist. Diese Stege sind jedoch optional.

Die Figur 4 zeigt einen Schnitt durch das erste Gehäuseteil 3. Es wird nun deutlich, dass der Druckanschluss 5 mit einer Druckanschlussleitung 14 strömungsverbunden beziehungsweise von dieser ausgebildet ist. Die Druckanschlussleitung 14 liegt als zylindrische Ausnehmung in dem Sensorgehäuse 2, insbesondere in dem ersten Gehäuseteil 3, vor. Sie ist insbesondere als Sackbohrung ausgeführt, weist auf der dem Druckanschluss 5 abgewandten Seite also einen Boden 15 auf. Dieser Boden 15 ist von der Druckausgleichsöffnung 13 durchgriffen, wobei die Druckausgleichsöffnung 13 bezüglich ihrer Längsmittelachse in radialer Richtung kleinere Abmessungen aufweist als die Druckanschlussleitung 14.

Von der Druckanschlussleitung 14 zweigt eine Sensorleitung 16 ab, welche nach einer Montage der Gehäuseteile 3 und 4 aneinander eine Strömungsverbindung zwischen der Druckanschlussleitung 14 und mithin dem Druckanschluss 5 auf der einen Seite und der Sensorkammer 8 auf der anderen Seite herstellt. Es ist nun deutlich zu erkennen, dass das Druckausgleichselement 9 strömungstechnisch parallel zu der Sensorkammer 8 mit dem Druckanschluss 5 verbunden ist. Die Sensorleitung 16 beziehungsweise ihre Längsmittelachse steht dabei in der hier gezeigten Ausführungsform senkrecht auf einer Längsmittelachse der Druckanschlussleitung 14. Selbstverständlich kann jedoch auch eine andere Anordnung der Sensorleitung 16 gewählt sein.

Mithilfe der hier gezeigten parallelen Anordnung von Druckausgleichselement 9 und Sensorkammer 8 werden mehrere Vorteile erzielt. Zum einen werden Beeinflussungen des in der Sensorkammer 8 angeordneten Drucksensors durch den mithilfe des Druckausgleichselements 9 durchgeführten Druckausgleich verhindert, sodass die Messgenauigkeit verbessert wird. Zum anderen werden durch den Druckausgleich bewirkte Strömungen in der Sensorkammer 8 zumindest teilweise verhindert. Der Druckausgleich kann also stattfinden, ohne dass Fluid aus der Sensorkammer 8 hinaus oder in diese hineinströmt. Entsprechend wird auch der Eintrag von Feuchtigkeit beziehungsweise feuchtem Fluid in die Sensorkammer 8 weitgehend verhindert. Entsprechend werden Beschädigungen von in der Sensorkammer 8 angeordneten Elementen, insbesondere des Drucksensors, wirkungsvoll vermieden.

Auch wird eine Montage der Drucksensoranordnung 1 deutlich vereinfacht. Das Druckausgleichselement 9 in Form einer Membran kann vor einer Montage der Gehäuseteile 3 und 4 aneinander an dem Gehäuseteil 3 befestigt werden, weil der Zugriff aus der Außenumgebung 12 auf das Druckausgleichselement 9 beziehungsweise die Position an dem Gehäuseteil 3, an welchem es befestigt werden soll, ohne Weiteres möglich ist. Bei der Montage der Gehäuseteile 3 und 4 aneinander gelangt die Abdeckung 10 in wenigstens teilweise Überdeckung zu dem Druckausgleichselement 9, sodass dieses nachfolgend wenigstens bereichsweise abgedeckt ist. Mithin kann zwar über das Druckausgleichselement 9 der Druckausgleich durchgeführt werden, eine Beschädigung des Druckausgleichselements 9 durch äußere Einflüsse aus der Außenumgebung 12 wird jedoch verhindert.

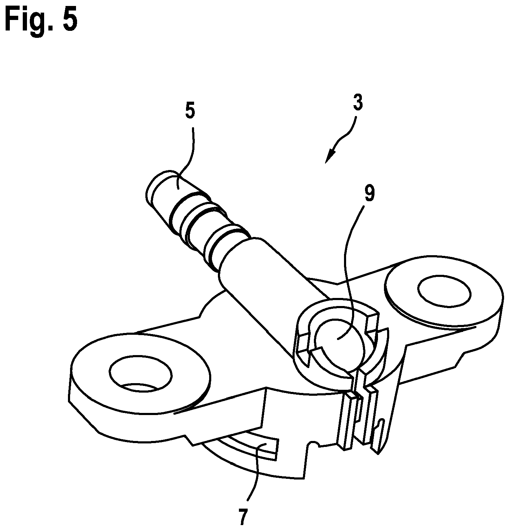

Die Figur 5 zeigt eine zweite Ausführungsform des ersten Gehäuseteils 3. Nachfolgend soll lediglich auf die Unterschiede eingegangen werden, sodass auf die vorstehenden Ausführungen verwiesen wird. Die Druckausgleichsöffnung 13 ist in der hier dargestellten Ausführungsform auf einer der Sensorkammer 8 gegenüberliegenden Seite der Druckanschlussleitung 14 angeordnet beziehungsweise mündet auf dieser Seite in die Druckanschlussleitung 14 ein. Entsprechend ist das Druckausgleichselement 9 auf eben dieser Seite der Druckanschlussleitung 14 angeordnet. Bei einer derartigen Ausführungsform kann die Abdeckung 10 an dem zweiten Gehäuseteil 4 entfallen. Sie kann jedoch in anders gestalteter Form vorhanden sein, um dennoch ein Abdecken des Druckausgleichselements 9 an der hier dargestellten Position zu ermöglichen.

## Patentansprüche

1. Drucksensoranordnung (1), mit einem Sensorgehäuse (2), das einen Druckanschluss (5) aufweist und in einer Sensorkammer (8) einen Drucksensor aufnimmt, und mit einem Druckausgleichselement (9) zum Druckausgleich zu einer Außenumgebung (12) der Drucksensoranordnung (1), wobei das Druckausgleichselement (9) über eine Druckanschlussleitung (14) strömungstechnisch parallel zu der Sensorkammer (8) mit dem Druckanschluss (5) verbunden ist, wobei der Druckanschluss (5) mit der Druckanschlussleitung (14) strömungsverbunden ist, von der eine in die Sensorkammer (8) einmündende Sensorleitung (16) abzweigt und ein zweiter Zweig der Druckanschlussleitung (14) den Druckanschluss (5) mit dem Druckausgleichselement (9) verbindet und das Druckausgleichselement (9) eine in einer Wandung der Druckanschlussleitung (14) vorgesehene Druckausgleichsöffnung (13) verschließt, wobei
das Sensorgehäuse (2) aus einem ersten Gehäuseteil (3) und einem zweiten Gehäuseteil (4) besteht, wobei die Sensorkammer (8) von den beiden Gehäuseteilen (3,4) gemeinsam ausgebildet ist, wobei das Druckausgleichselement (9) an einer Außenseite des ersten Gehäuseteils,
**dadurch gekennzeichnet, dass**
der Druckanschluss (5) an dem ersten Gehäuseteil (3) und der Drucksensor und eine das an dem zweiten Gehäuseteil (4) vorgesehen ist,
Druckausgleichselement (9) wenigstens bereichsweise übergreifende Abdeckung (10) an dem zweiten Gehäuseteil (4) angeordnet ist.

2. Drucksensoranordnung nach einem der vorhergehenden Ansprüche, **dadurch gekennzeichnet, dass** die Druckausgleichsöffnung (13) sich in Richtung einer Längsmittelachse der Druckanschlussleitung (14) erstreckt.

3. Drucksensoranordnung nach einem der vorhergehenden Ansprüche, **dadurch gekennzeichnet, dass** der erste Gehäuseteil (3) und der zweite Gehäuseteil (4) formschlüssig, insbesondere mittels einer Hintergriffsverbindung, miteinander verbunden sind.

4. Verfahren zum Montieren einer Drucksensoranordnung (1) nach einem oder mehreren der vorhergehenden Ansprüche, wobei die Drucksensoranordnung (1) über ein Sensorgehäuse (2), das einen Druckanschluss (5) aufweist und in einer Sensorkammer (8) einen Drucksensor aufnimmt, und über ein Druckausgleichselement (9) zum Druckausgleich zu einer Außenumgebung (12) der Drucksensoranordnung (1) verfügt, wobei das Druckausgleichselement (9) strömungstechnisch parallel zu der Sensorkammer (8) mit dem Druckanschluss (5) verbunden wird
**dadurch gekennzeichnet, dass**
das Sensorgehäuse (2) aus einem ersten Gehäuseteil (3) sowie einem zweiten Gehäuseteil (4) besteht und die Sensorkammer (8) von den beiden Gehäuseteilen (3,4) gemeinsam ausgebildet wird, wobei der Druckanschluss (5) an dem ersten Gehäuseteil (3), das Druckausgleichselement (9) an einer Außenseite des ersten Gehäuseteils (3) und der Drucksensor an dem zweiten Gehäuseteil (4) vorgesehen ist, und dass bei einem Befestigen des ersten Gehäuseteils (3) an dem zweiten Gehäuseteil (4) eine an dem zweiten Gehäuseteil (4) angeordnete Abdeckung (10) das Druckausgleichselement (9) wenigstens bereichsweise überdeckt und angeordnet wird.

## Claims

1. Pressure sensor arrangement (1) having a sensor housing (2) which has a pressure connection (5) and accommodates a pressure sensor in a sensor chamber (8), and having a pressure equalization element (9) for equalizing pressure with respect to the external surroundings (12) of the pressure sensor arrangement (1), wherein the pressure equalization element (9) is fluidically connected to the pressure connection (5) in parallel with the sensor chamber (8) via a pressure connection line (14), wherein the pressure connection (5) has a flow connection to the pressure connection line (14), from which a sensor line (16) which opens into the sensor chamber (8) branches off, and a second branch of the pressure connection line (14) connects the pressure connection (5) to the pressure equalization element (9), and the pressure equalization element (9) closes a pressure equalization opening (13) which is provided in a wall of the pressure connection line (14), wherein the sensor housing (2) is composed of a first housing part (3) and a second housing part (4), wherein the sensor chamber (8) is formed jointly by the two housing parts (3, 4), wherein the pressure equalization element (9) on an outer side of the first housing part,
**characterized in that**
the pressure connection (5) is provided on the first housing part (3), and the pressure sensor is provided on the second housing part (4) and a cover (10) which engages at least partially over the pressure equalization element (9) is arranged on the second housing part (4).

2. Pressure sensor arrangement according to one of the preceding claims,
**characterized in that**
**in that** the pressure equalization opening (13) extends in the direction of a longitudinal centre axis of the pressure connection line (14).

3. Pressure sensor arrangement according to one of the preceding claims,
**characterized in that**
the first housing part (3) and the second housing part (4) are connected to one another in a positively locking fashion, in particular by means of a rear-engagement connection.

4. Method for mounting a pressure sensor arrangement (1) according to one or more of the preceding claims, wherein the pressure sensor arrangement (1) comprises a sensor housing (2) which has a pressure connection (5), and accommodates a pressure sensor in a sensor chamber (8), and comprises a pressure equalization element (9) for equalizing pressure with the external surroundings (12) of the pressure sensor arrangement (1), wherein the pressure equalization element (9) is fluidically connected to the pressure connection (5) in parallel with the pressure chamber (8),
**characterized in that**
the sensor housing (2) is composed of a first housing part (3) and a second housing part (4), and the sensor chamber (8) is jointly formed by the two housing parts (3, 4), wherein the pressure connection (5) is provided on the first housing part (3), the pressure equalization element (9) is provided on an outer side of the first housing part (3), and the pressure sensor is provided on the second housing part (4), and **in that** when the first housing part (3) is attached to the second housing part (4), a cover (10) which is arranged on the second housing part (4) at least partially covers the pressure equalization element (9) and is arranged.

## Revendications

1. Ensemble formant capteur de pression (1), ledit ensemble comprenant un boîtier de capteur (2) qui comporte un raccord de pression (5) et qui reçoit un capteur de pression dans une chambre de capteur (8), et un élément de compensation de pression (9) destiné à compenser la pression par rapport à un environnement extérieur (12) de l'ensemble formant capteur de pression (1), l'élément de compensation de pression (9) étant relié fluidiquement au raccord de pression (5) par le biais d'une conduite de raccordement de pression (14) parallèlement à la chambre de capteur (8), le raccord de pression (5) étant relié fluidiquement à la conduite de raccordement de pression (14) de laquelle dérive une conduite de capteur (16) débouchant dans la chambre de capteur (8) et une deuxième branche de la conduite de raccordement de pression (14) reliant le raccord de pression (5) à l'élément de compensation de pression (9) et l'élément de compensation de pression (9) fermant une ouverture de compensation de pression (13) ménagée dans une paroi de la conduite de raccordement de pression (14),
le boîtier de capteur (2) comprenant une première partie de boîtier (3) et une deuxième partie de boîtier (4), la chambre de capteur (8) étant formée conjointement par les deux parties de boîtier (3, 4), l'élément de compensation de pression (9) sur un côté extérieur de la première partie de boîtier,
**caractérisé en ce que**
le raccord de pression (5) est prévu sur la première partie de boîtier (3) et le capteur de pression est prévu sur la deuxième partie de boîtier (4) et un capot (10) s'engageant au moins par endroits sur l'élément de compensation de pression (9) est disposé sur la deuxième partie de boîtier (4).

2. Ensemble formant capteur de pression selon l'une des revendications précédentes, **caractérisé en ce que** l'ouverture de compensation de pression (13) s'étend en direction d'un axe central longitudinal de la conduite de raccordement de pression (14).

3. Ensemble formant capteur de pression selon l'une des revendications précédentes, **caractérisé en ce que** la première partie de boîtier (3) et la deuxième partie de boîtier (4) sont reliées l'une à l'autre par complémentarité de formes, notamment au moyen d'une liaison d'engagement arrière.

4. Procédé de montage d'un ensemble formant capteur de pression (1) selon une ou plusieurs des revendications précédentes, l'ensemble formant capteur de pression (1) disposant d'un boîtier de capteur (2), qui comporte un raccord de pression (5) et qui reçoit un capteur de pression dans une chambre de capteur (8), et d'un élément de compensation de pression (9) destiné à compenser la pression par rapport à un environnement extérieur (12) de l'ensemble formant capteur de pression (1), l'élément de compensation de pression (9) étant relié fluidiquement au raccord de pression (5) parallèlement à la chambre de capteur (8),
**caractérisé en ce que**
le boîtier de capteur (2) comprenant une première partie de boîtier (3) et une deuxième partie de boîtier (4) et la chambre de capteur (8) est formée conjointement par les deux parties de boîtier (3, 4), le raccord de pression (5) étant prévu sur la première partie de boîtier (3), l'élément de compensation de pression (9) étant prévu du côté extérieur de la première partie de boîtier (3) et le capteur de pression étant prévu sur la deuxième partie de boîtier (4), et **en ce que**, lorsque la première partie de boîtier (3) est fixée sur la deuxième partie de boîtier (4), un capot (10) disposé sur la deuxième partie de boîtier (4) recouvre l'élément de compensation de pression (9) au moins partiellement et est disposé.
